(19) Europäisches Patentamt
European Patent Office
Office européen des brevets

(11) EP 0 641 833 B1

(12) EUROPÄISCHE PATENTSCHRIFT

(45) Veröffentlichungstag und Bekanntmachung des Hinweises auf die Patenterteilung:
**07.10.1998 Patentblatt 1998/41**

(51) Int Cl.[6]: **C08L 91/06**, C08L 83/04, D06M 15/227, D06M 15/643

(21) Anmeldenummer: **94810488.0**

(22) Anmeldetag: **26.08.1994**

(54) **Wässrige Wachs- und Silicondispersionen, deren Herstellung und Verwendung**

Aqueous dispersions of waxes and silicones, their production and use

Dispersions aqueuses de cires et de silicones, leur fabrication et leur utilisation

(84) Benannte Vertragsstaaten:
**CH DE ES FR GB IT LI**

(30) Priorität: **31.08.1993 DE 4329244**

(43) Veröffentlichungstag der Anmeldung:
**08.03.1995 Patentblatt 1995/10**

(73) Patentinhaber: **Clariant Finance (BVI) Limited**
**Road Town, Tortola (VG)**

(72) Erfinder: **Danner, Bernard**
**F-68400 Riedisheim (FR)**

(74) Vertreter: **D'haemer, Jan Constant**
**Clariant International Ltd.,**
**Rothausstrasse 61**
**4132 Muttenz 1 (CH)**

(56) Entgegenhaltungen:
**EP-A- 0 063 311**
**EP-A- 0 220 400**
**EP-A- 0 412 324**
**EP-A- 0 535 437**
**WO-A-92/04409**
**GB-A- 2 177 720**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Bei der Ausrüstung von Textilmaterial zur Erzielung eines verbesserten Weichgriffes ist man danach bestrebt, den stets wachsenden Anforderungen an die Weichgriffausrüstung, sei es für Tragecomfort von Kleidungsstücken, sei es für die Konfektionierung und die sonstige Handhabung der Ware, gerecht zu werden, was besonders bei permanenten Weichgriffausrüstungen von Bedeutung ist. Für permanente Weichgriffausrüstungen werden meist Siliconweichmacher eingesetzt, mit welchen Weichgriffausrüstungen hoher Permanenz erhalten werden können, wobei, obzwar eine mehr oder weniger wirksame Weichgriffausrüstung erhalten werden kann, diese oft den - vor allem bei der Konfektionierung - weniger erwünschten Charakter eines "fließenden" Weichgriffes aufweist oder auch den nicht immer erwünschten typischen "Siliconweichgriff" aufweist. Bei der Ausrüstung mit Wachspräparaten werden im allgemeinen semi-permanente Ausrüstungen erhalten, welche meist einen nicht besonders ausgeprägten Weichgriff aufweisen. Bei der Weichgriffausrüstung von Weißware, d.h. optisch aufgehellter Ware, können manche Weichgriffmittel die optischen Aufhellungen auf unvorhersehbare Weise oder/und in unvorhersehbarem Ausmaß beeinträchtigen.

Aus den EP-A-412 324 und 535 437 sind wäßrige Präparate bekannt, die bestimmte substituierte Aminopolysiloxane (acylierte Aminopolysiloxane, cyclohexylaminogruppenhaltige oder Piperazinreste enthaltende Polysiloxane) und bestimmte Polyäthylenwachse enthalten; in Vergleichspräparaten werden auch analoge Präparate beschrieben, worin die Aminogruppen der Aminopolysiloxane die jeweiligen Substituenten nicht enthalten, sondern unsubstituiert sind (Beispiel 2 der EP-A-535 437 und Beispiele 3 und 4 der EP-A-412 324). Die jeweils spezifisch beschriebenen Polysiloxane weisen einen wesentlichen Stickstoffgehalt auf (in den Beispielen $\geq$ 0,7 %). Bei den Präparaten der Vergleichsbeispiele 3 und 4 der EP-A-412 324 wird gezeigt, daß sie beim Lagern und bei der Applikation unstabil sind: beim Lagern findet eine starke Verfärbung ("stark gelbbraun") des Präparates statt und bei der Applikation in Gegenwart von Zellulosevernetzern werden Ausfällungen und Ablagerungen festgestellt. Ein derart stark verfärbtes Präparat wäre für die Ausrüstung von Weißware ungeeignet und ein in Gegenwart von Zellulosevernetzern derart unbeständiges Präparat ist für solche Kunstharzausrüstungen ungeeignet. Beim Präparat des Vergleichsbeispiels 2 der EP-A-535 437 wird gezeigt, daß das Produkt eine pastöse Mischung ist, die nach 1-monatiger Lagerung fest geworden war. Wie in der EP-A-535 437 dargelegt (Seite 2, Zeilen 26-27), weisen die Präparate der EP-A-412 324 Nachteile im Griff der damit ausgerüsteten Ware auf. Die Herstellung von stabilen und gut wirksamen Präparaten, die ausschließlich aminofunktionelle Polysiloxane, wie sie in der US-A-4 620 878 und der WO-A-88/08436 beschrieben sind, und Polyäthylenwachse enthielten, werden in der EP-A-535 437 als wünschenswert (Seite 2, Zeile 26) bzw. als noch nicht gelöstes Problem (Seite 2, Zeilen 28-37) bezeichnet.

Es wurde nun überraschenderweise gefunden, daß durch Kombination bestimmter stickstoffarmer weichmachender Silicone (insbesondere auch solcher worin die Aminogruppen unsubstituiert sind) mit bestimmten oxydierten Wachsen besonders hoher Härte und gegebenenfalls weiteren Zusätzen, wie unten beschrieben, Weichmacherpräparate erhältlich sind, die eine gute Stabilität sowohl beim Lagern als auch bei der Applikation aufweisen und mit welchen sehr permanente Ausrüstungen mit sehr angenehmem Weichgriff erhältlich sind, wobei die Präparate auch mit anderen Komponenten, die in den Behandlungsflotten vorhanden sein können, gut verträglich sind, die Nähbarkeit der Ware günstig beeinflussen und die Saugfähigkeit des Substrates praktisch nicht beeinträchtigen. Es ist insbesondere Weißware von optimalem Weiß erhältlich.

Die Erfindung betrifft die definierten, Wachs und Polydiorganosiloxan enthaltenden Dispersionen (P), deren Herstellung und deren Verwendung als Ausrüstungsmittel.

Ein erster Gegenstand der Erfindung sind also wäßrige, dispergatorhaltige Wachs- und Polydiorganosiloxandispersionen (P) enthaltend
als Wachs

(A) mindestens ein oxydiertes Kohlenwasserstoffwachs mit Nadelpenetration (nach ASTM D-1321) $\leq$ 4 dmm,
und gegebenenfalls
(B) mindestens ein nicht-oxydiertes Kohlenwasserstoffwachs,
und als Polydiorganosiloxan
(C) mindestens ein gegebenenfalls aminomodifiziertes oder/und nicht-ionogen modifiziertes Polydiorganosiloxan mit einem Stickstoffgehalt < 0,6 Gew.-%

Die Wachse (A) sind im wesentlichen carboxygruppenhaltige, oxydierte und gegebenenfalls teilverseifte Kohlenwasserstoffwachse.

Als carboxygruppenhaltige, oxydierte und gegebenenfalls teilverseifte Kohlenwasserstoffwachse (A) kommen im allgemeinen beliebige synthetische und/oder mineralische Wachse in Betracht, die in der oxydierten Form noch eine Wachsstruktur haben und eine Nadelpenetration (nach ASTM D-1321) $\leq$ 4 dmm aufweisen, z.B. oxydierte Mikrowachse oder oxydierte Polyolefinwachse (vornehmlich Polyäthylenwachse) oder noch Wachse, die gegebenenfalls direkt in oxydierter Form synthetisiert werden, z.B. Fischer-Tropsch-Wachse und auch deren Oxydationswachse, wobei die

genannten oxydierten Wachse, besonders die oxydierten Polyolefinwachse und die Fischer-Tropsch-Wachse, gegebenenfalls teilverseift sein können. Unter den erwähnten Wachsen (A) sind die oxydierten und gegebenenfalls teilverseiften Mikrowachse, Fischer-Tropsch-Wachse und insbesondere Polyäthylenwachse bevorzugt. Solche Wachse sind im allgemeinen bekannt und können, außer durch die Nadelpenetration, durch sonstige übliche Parameter, wie Tropfpunkt, Säurezahl, und gegebenenfalls Verseifungszahl, Dichte, Molgewicht und/oder Erstarrungspunkt, näher charakterisiert werden. Die Nadelpenetration kann z.B. nach der Standardvorschrift ASTM D-1321 oder auch nach anderen Standardvorschriften, die dieser äquivalent sind (z.B. nach DIN 51579 oder DGF M-III-9b), bestimmt werden. Die Nadelpenetration von (A) nach ASTM D-1321 ist vorteilhaft im Bereich von 0,1 bis 4 dmm, vorzugsweise 0,1 bis 2,5 dmm. Der Tropfpunkt von (A) ist vorzugsweise ≥ 80°C, insbesondere innerhalb des Temperaturbereiches von 80 bis 150°C; die Säurezahl von (A) liegt vorteilhaft im Bereich von 5 bis 80, vorzugsweise 10 bis 50. Die Verseifungszahl von (A) liegt vorteilhaft im Bereich von 10 bis 120, vorzugsweise 20 bis 80. Unter den oxydierten Mikrowachsen sind diejenigen bevorzugt, deren Tropfpunkt innerhalb des Temperaturbereiches von 90 bis 120°C liegt; von den oxydierten, gegebenenfalls teilverseiften Polyäthylenwachsen sind solche bevorzugt, deren Tropfpunkt innerhalb des Temperaturbereiches von 95 bis 150°C, besonders 102 bis 150°C, liegt; unter den Fischer-Tropsch-Wachsen sind besonders die teilverseiften Fischer-Tropsch-Wachse bevorzugt, deren Tropfpunkt im Temperaturbereich von 85 bis 120°C liegt. Die Dichte der genannten Wachse (A) liegt vorteilhaft im Bereich von 0,94 bis 1,05 g/$cm^3$ bei 20°C, wobei unter den oxydierten Polyäthylenwachsen besonders diejenigen bevorzugt sind, deren Dichte im Bereich von 0,96 bis 1,02 g/$cm^3$ bei 20°C liegt. Unter den oxydierten Polyäthylenwachsen sind insbesondere diejenigen bevorzugt, deren durchschnittliches Molgewicht $\overline{M}_W$ im Bereich von 1000 bis 20000 liegt.

Die Wachse (A) können einheitliche oxydierte Wachse oder auch Gemische solcher oxydierter Wachse sein, insbesodere Gemische von oxydierten Polyäthylenwachsen mit oxydierten Mikrowachsen und/oder Fischer-Tropsch Wachsen oder Gemische von oxydierten Mikrowachsen mit Fischer-Tropsch Wachsen.

Als Wachse (B) kommen im wesentlichen Paraffinwachse in Betracht, insbesondere solche, wie sie aus der Aufarbeitung von Erdöl und/oder Erdöldestillationsrückständen erhältlich sind, vornehmlich raffinierte Paraffine. Solche Wachse können ebenfalls durch übliche Paramater charakterisiert werden, z.B. durch die Nadelpenetration und gegebenenfalls durch den Erstarrungspunkt und/oder den Tropfpunkt. Die Nadelpenetration nach ASTM D-1321 ist vorteilhaft ≤ 40 dmm, vorzugsweise im Bereich von 0,5 bis 20 dmm. Der Tropfpunkt ist vorteilhaft ≥ 40°C, vorzugsweise im Bereich von 45 bis 112°C.

Das Gewichtsverhältnis (B)/(A) liegt insbesondere im Bereich von 0 bis 2, vorteilhaft 0 bis 1,5:1, vorzugsweise 0 bis 1:1. Wenn (B) eingesetzt wird, ist das Gewichtsverhältnis (B)/(A) vorzugsweise ≥ 0,05:1, besonders ≥ 0,1:1.

Als Polydiorganosiloxane (C) eignen sich im allgemeinen beliebige Polydiorganosiloxane, die Si-gebundene, vorzugsweise aliphatische, gegebenenfalls amino-substituierte oder/und nicht-ionogen substituierte Kohlenwasserstoffreste enthalten, und die mit Hilfe geeigneter Dispergatoren in Wasser dispergierbar sind. Vorteilhaft tragen diese Kohlenwasserstoffreste entweder keine modifizierenden Substituenten oder, wenn sie modifizierende Substituenten enthalten, sind diese entweder nicht-ionogene Substituenten oder, vorzugsweise, über die Kohlenwasserstoffbrücken an Si gebundene aliphatische Aminogruppen. Die vorhandenen Aminogruppen können gegebenenfalls substituiert sein, insbesondere aliphatisch (offenkettig oder cycloaliphatisch) substituiert oder amidiert, vorzugsweise mit dem Acylrest einer aliphatischen Carbonsäure acyliert. Als solche N-haltigen Gruppen kommen vornehmlich diejenigen der unten definierten Formel $-Y-NH-R_1$ oder/und Acylierungsprodukte davon in Betracht. Es können als (C) z.B. solche Polydiorganosiloxane eingesetzt werden, die als Textilausrüstungsmittel, insbesondere als Textilweichmacher, bekannt sind oder analog dazu brauchbar sind. Bevorzugt sind Polydimethylsiloxane, die hydroxy-, äthoxy-, methoxy-, äthyl- oder methylterminiert sein können und die, gegebenenfalls, über einen niederen Si-gebundenen aliphatischen Kohlenwasserstoffrest aminosubstituierte Siloxyeinheiten enthalten. Vornehmlich sind die einzusetzenden Polydiorganosiloxane (C) aus wiederkehrenden Einheiten der folgenden Formeln aufgebaut:

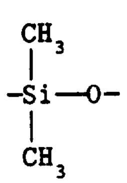

$(c_1)$

und gegebenenfalls

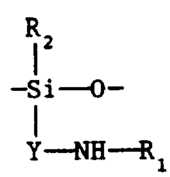

$(c_2)$,

und gegebenenfalls $(c_3)$: Alkylierungs- oder/und Acylierungsprodukten von Einheiten der Formel $(c_2)$, worin

Y einen zweiwertigen Kohlenwasserstoffrest mit 2 bis 6 Kohlenstoffatomen,
$R_1$ Wasserstoff, $C_{1-6}$-Alkyl, Cyclohexyl oder $-(CH_2)_m-NH_2$,
m 2 oder 3,
$R_2$ $-CH_3$ oder $-O-G_1$

und

$G_1$ Wasserstoff, Methyl oder die Bindung zu einem Rest der untenstehenden Formeln ($c_4$) oder ($c_5$), oder zu ($c_6$) oder zu einem Polysiloxanrest aus Einheiten ($c_1$) und/oder ($c_2$) und/oder ($c_3$)

bedeuten.

Die Endgruppen der Polysiloxanketten entsprechen vorzugsweise den Formeln

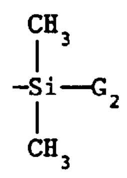

($c_4$)

und/oder

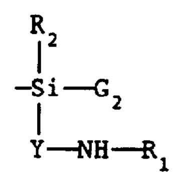

($c_5$),

und/oder ($c_6$): Alkylierungs- oder/und Acylierungsprodukten von Einheiten der Formel ($c_5$), worin $G_2$ Methyl, Äthyl, Methoxy, Äthoxy oder Hydroxy bedeutet.

In den Formeln ($c_2$), ($c_3$), ($c_5$) und ($c_6$) steht Y vorteilhaft für einen aliphatischen, vorzugsweise gesättigten Kohlenwasserstoffrest mit 3 bis 4 Kohlenstoffatomen, insbesondere Propylen-1,3 oder 2-Methyl-propylen-1,3.

$R_1$ steht vorteilhaft für Wasserstoff, Cyclohexyl oder $-(CH_2)_m-NH_2$, vorzugsweise für Aminoäthyl oder Aminopropyl, insbesondere für Aminoäthyl.

$R_2$ steht vorzugsweise für Methyl.

Die Polydiorganosiloxane (C) können einheitliche Polysiloxane oder Gemische verschiedener Polysiloxane sein. Sie weisen vorteilhaft eine Viskosität im Bereich von 500 bis 30'000, vornehmlich 700 bis 20'000, vorzugsweise 800 bis 15'000 cP (Brookfield, Rotationsviskosimeter Rv, Spindel Nr. 5, 20°C) auf. Die durchschnittliche Aminzahl der (gesamten) Polydiorganosiloxane (C) liegt vorteilhaft im Bereich von 0 bis 0,4; wenn die Polydiorganosiloxane (C) aminogruppenhaltig sind, liegt die Aminzahl (vor einer allfälligen Acylierung) vornehmlich im Bereich von 0,001 bis 0,4, vorzugsweise 0,01 bis 0,35. Der Stickstoffgehalt von (C) liegt vorteilhaft im Bereich von 0 bis 0,5 Gew.-%, vorzugsweise 0 bis 0,47 Gew.-%, besonders bevorzugt im Bereich von 0,014 bis 0,47 Gew.-%.

Als Aminzahl eines Produktes (d.h. die Anzahl Mol neutralisierbarer Aminogruppen in 1000 g Produkt) wird hier die Anzahl Mol Salzsäure verstanden, die erforderlich ist um 1000 g des nicht protonierten Produktes zu neutralisieren.

Schematisch können die gegebenenfalls aminomodifizierten bevorzugten Polydiorganosiloxane (C) durch die folgende allgemeine Formel dargestellt werden

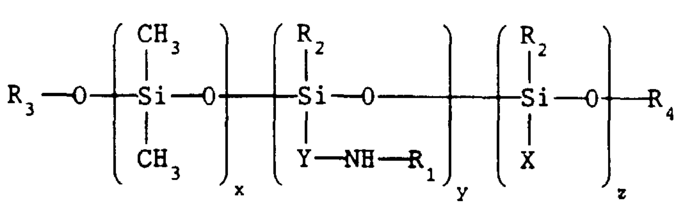

(II),

worin $R_3$ und $R_4$ jeweils eine Gruppe der Formel ($c_4$), ($c_5$) oder ($c_6$) und X einen aus der Alkylierung oder/und Acylierung eines Restes $-Y-NH-R_1$ resultierenden Rest bedeuten, und die Indices x, y und z so gewählt werden, daß das Polymere die oben-angegebenen Werte für Aminzahl und Viskosität aufweist.

Die aminomodifizierten Polydiorganosiloxane (C) können auf an sich bekannte Weise oder analog zu bekannten Methoden hergestellt werden, z.B. durch Aminoalkylierung entsprechender Polydiorganosiloxane, die reaktive Si-gebundene Wasserstoffatome aufweisen, oder vorzugsweise durch Umsetzung von aminogruppenhaltigen Silanen mit nichtionogenen reaktiven Mono- oder Polydiorganosiloxanen, insbesondere mit $\alpha,\omega$-Dihydroxypolydimethylsiloxanen, wel-

che vorteilhaft ein durchschnittliches Molekulargewicht $\overline{M}_W$ im Bereich von 500 bis 10'000, vorzugsweise 1000 bis 7000, aufweisen, oder cyclischen Siloxanen, z.B. Hexamethylcyclotrisiloxan oder/und Octamethylcyclotetrasiloxan. Als Aminosilane kommen vornehmlich aminosubstituierte Trimethoxysilane oder Dimethoxymethylsilane in Betracht, worin die Aminogruppe über Kohlenstoff an das Siliciumatom gebunden ist und vorzugsweise der Formel $-Y-NH-R_1$ und gegebenenfalls -X entspricht. Bevorzugte Reste $-Y-NH-R_1$ sind γ-Aminopropyl und γ-(β-Aminoäthylamino)-propyl.

Gewünschtenfalls können die im aminomodifizierten Polysiloxanmolekül vorhandenen Aminogruppen z.B. mit $C_{1-12}$-Alkylresten alkyliert sein. Diese Alkylreste können linear oder, wenn sie 3 bis 12 Kohlenstoffatome enthalten, auch verzweigt oder noch, wenn sie ≥ 6 Kohlenstoffatome enthalten, auch cyclisch sein; bevorzugt darunter sind $C_{4-9}$-aliphatische Reste, insbesondere $C_{6-9}$-cycloaliphatische Reste.

Nach einer weiteren Variante können die Aminogruppen in aminogruppenhaltigen Polydiorganosiloxanen mindestens teilweise acyliert sein, z.B. mit aliphatischen Carbonsäureresten die 2 bis 12 Kohlenstoffatome enthalten, vorzugsweise solchen, die 2 bis 8 Kohlenstoffatome enthalten und die entweder unsubstituiert sind oder, wenn sie 4 bis 8 Kohlenstoffatome enthalten, vorzugsweise hydroxysubstituiert sind.

Die Alkylierung von Aminogruppen im Polydiorganosiloxan kann partiell oder vollständig sein; vorteilhaft sind mindestens 20 Mol-%, insbesondere 40 bis 100 Mol-% der vorhandenen alkylierbaren Aminogruppen alkyliert. Die Herstellung davon kann auf bekannte Weise erfolgen, z.B. wie in der EP 306 935 A2 beschrieben, auf welche hier ausdrücklich Bezug genommen wird.

Für die Einführung von Acylresten können beispielsweise die entsprechenden Säureanhydride verwendet werden oder, für die hydroxysubstituierten Acylreste, insbesondere die entsprechenden Lactone (z.B. γ-Butyrolacton, γ-oder δ-Valerolacton und γ-, δ- oder ε-Caprolacton). Die vorhandenen Aminogruppen können teilweise oder auch erschöpfend acyliert werden, beispielsweise können 10 bis 100, vorzugsweise 30 bis 90 Mol-% der vorhandenen Aminogruppen acyliert werden. Nach einer bevorzugten Ausführungsform der Erfindung sind die acylierten Aminopolysiloxane (C) solche aus der Acylierung von Polydiorganosiloxanen (C), die Si-gebundene Reste der Formel

$$-Y-NH-(CH_2)_m-NH_2 \qquad (y1)$$

enthalten, worin die primären Aminogruppen vorwiegend acyliert sind; vorteilhaft sind mindestens 40 %, insbesondere 50 bis 90 % der Aminogruppen acyliert, wobei die primären Aminogruppen vorwiegend acyliert sind. Besonders bevorzugt sind alle primären Aminogruppen acyliert, so daß das acylierte Derivat anstelle der Gruppen der Formel (y1) Gruppen der folgenden Formeln:

$$-Y-NH-(CH_2)_m-NH-Ac \qquad (y2)$$

und gegebenenfalls

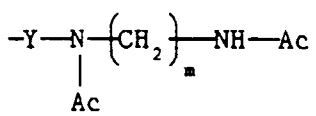

(y3),

worin Ac den durch Acylierung eingeführten Säurerest bedeutet, aufweist.

Die Herstellung von aminofunktionellen Polydiorganosiloxanen kann auf an sich bekannte Weise erfolgen, z.B. wie in den US-Patenten 2 947 771 und 4 419 391, im französischen Patent 2 440 961 und in den Europäischen Offenlegungsschriften EP-A 55 606, 68 671 und 417 047 beschrieben. Die Acylierung von aminofunktionellen Polydiorganosiloxanen kann auch auf an sich bekannte Weise erfolgen, z.B. wie in den US-Patenten 2 929 829, 3 440 261 und 4 507 455 oder in der EP 342 830 A2 beschrieben. Auf die genannten Patente und Offenlegungsschriften wird hier ausdrücklich Bezug genommen.

Es können einheitliche Polydiorganosiloxane eingesetzt werden oder auch Gemische verschiedener Polydiorganosiloxane, z.B. von einfachen Polydimethylsiloxanen, die außer den Dimethylsiloxyeinheiten und den Endgruppen $G_2$ keine sonstigen Substituenten enthalten, und aminofunktionellen Polydimethylsiloxanen, worin die Aminogruppen gegebenenfalls wie oben beschrieben modifiziert sein können.

Die oben angegebene Aminzahl stellt im allgemeinen eine durchschnittliche Zahl dar, die bei den aminomodifizierten gegebenenfalls acylierten Polydiorganosiloxanen vorzugsweise im Bereich von 0,001 bis 0,4 liegt, und kann sich sowohl auf einheitliche Aminopolydiorganosiloxane als auch (beispielsweise bei Aminzahlen < 0,15) auf Gemische von aminogruppenhaltigen und aminogruppenfreien Polydiorganosiloxanen beziehen.

Vorzugsweise ist (C) stickstoffhaltig, besonders bevorzugt enthält es gegebenenfalls acylierte Aminogruppen -Y-NH-$R_1$, und die Aminzahl (vor Acylierung) ist vorteilhaft im Bereich von 0,01 bis 0,35. Vorzugsweise sind die Gruppen -Y-NH-$R_1$ nicht acyliert, besonders bevorzugt der Formel (y1).

Das Gewichtsverhältnis (C)/(A) in den erfindungsgemäßen Dispersionen (P) kann in einem weiten Bereich variieren, zweckmäßig in einem wirksamen Bereich, vorteilhaft im Bereich von 0,01:1 bis 20:1, vorzugsweise 0,05:1 bis 15:1, insbesondere 0,1:1 bis 10:1.

Die erfindungsgemäßen wäßrigen Präparate (P) enthalten die Wachse (A) und gegebenenfalls (B) und die Polydiorganosiloxane (C) in dispergierter Form, wozu zweckmäßig Dispergatoren eingesetzt werden. Als Dispergatoren kommen

(D) nicht-ionogene, kationische oder amphotere Dispergiermittelsysteme in Betracht.

Das jeweilige Dispergiermittelsystem (D) kann aus einem oder mehreren Tensiden bestehen, insbesondere aus

($D_0$) einem nicht-ionogenen Tensid oder einem Gemisch nicht-ionogener Tenside,
($D_K$) einem kationaktiven Tensid oder einem Gemisch kationaktiver Tenside
oder ($D_X$) einem amphoteren Tensid oder einem Gemisch amphoterer Tenside,

oder aus einem geeigneten Gemisch von zwei oder mehreren solcher Tenside, z.B. aus ($D_0$) und ($D_X$) oder aus ($D_0$) und/oder ($D_X$) mit ($D_K$).

Als nicht-ionogene Tenside ($D_0$) können im allgemeinen bekannte Verbindungen eingesetzt werden, die mindestens einen lipophilen Rest und mindestens einen nicht-ionogenen hydrophilen Rest enthalten, deren HLB-Werte z. B. im Bereich von 2 bis 16 liegen können, und die aliphatischen und gegebenenfalls auch aromatischen Charakter aufweisen können; vorzugsweise sind die Tenside ($D_0$) rein aliphatisch. Es können beispielsweise die folgenden Kategorien von Tensiden genannt werden: Oxäthylierungsprodukte von höheren Fettsäuren oder Fettsäureamiden, von höheren Fettalkoholen oder Mono- oder Dialkylphenolen, Fettsäurepartialester von Polyolen (z.B. Glycerin, Sorbitan oder Sorbitol) und deren Oxäthylierungsprodukte; gegebenenfalls können die Oxäthylierungsprodukte einen kleineren Anteil an Propylenoxyeinheiten enthalten. Besonders erwähnenswert sind Sorbitanmonoester von $C_{8-16}$- (vorzugsweise $C_{11-14}$-) -Fettsäuren und Oxäthylierungsprodukte von Fettalkoholen oder Fettsäureamiden, worin der Fettrest vorteilhaft 8 bis 22, vorzugsweise 10 bis 18 Kohlenstoffatome enthält. Es können insbesondere Oxäthylierungsprodukte der folgenden Fettalkohole und Fettsäureamide erwähnt werden: Laurylalkohol, Myristylalkohol, Cetylalkohol, Oleylalkohol, Stearylalkohol und technische Alkohole, insbesondere gegebenenfalls hydrierter oder destillierter Talgfettalkohol und Kokosfettalkohol, sowie die analogen Fettsäureamide, und schwach- oder starkverzweigte primäre oder sekundäre, synthetische Alkohole, z.B. solche aus der Oxosynthese (z.B. aus Propylen), worunter diejenigen mit 10 bis 15 Kohlenstoffatomen bevorzugt sind, vornehmlich Trimethylnonanol, Tetramethylnonanol und Tetramethyldecanol, insbesondere der primäre Isotridecylalkohol Tetramethylnonanol-l, sowie sekundäre, gesättigte $C_{13-16}$-Fettalkohole. Gewünschtenfalls können auch nicht-ionogene Tenside mit HLB ≥ 16 als Schutzkolloide zugegeben werden.

Als kationaktive Tenside ($D_K$) kommen im allgemeinen übliche kationaktive Tenside in Betracht, die mindestens einen lipophilen Kohlenwasserstoffrest und mindestens eine hydrophile kationische Gruppe enthalten; als hydrophile kationische Gruppen kommen insbesondere basische Aminogruppen und deren protonierten und/oder quaternierten Abkömmlinge in Betracht, vornehmlich tertiäre Aminogruppen und protonierte oder quaternierte Ammoniumgruppen. Die Ammoniumgruppen können gegebenenfalls einem Heterocyclus angehören, z.B. einem Pyridinium- oder Imidazoliniumring. Gegebenenfalls können die Stickstoffatome durch Hydroxyäthyl- oder Polyäthylenglykolketten substituiert sein. Es können insbesondere die kationischen Tenside der folgenden Formel genannt werden

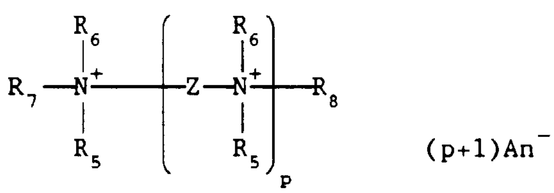

(III),

worin

$R_5$ jeweils $C_{1-4}$-Alkyl oder einen Rest der Formel -($CH_2$-$CH_2$-O)$_q$-H,

$R_6$ jeweils Wasserstoff, $C_{1-4}$-Alkyl, β-Hydroxyäthyl oder Benzyl,
$R_7$ einen Rest der Formel $R_9$-$CH_2$-, $R_9$-CO-NH-Z-, $R_9$-CO-O-Z'- oder $R_9$-$CH_2$-O-Z"-,
$R_8$ $C_{1-4}$-Alkyl, einen Rest der Formel -($CH_2$-$CH_2$-O)$_q$-H oder $R_7$,
$R_9$ einen aliphatischen Kohlenwasserstoffrest mit 7 bis 23 Kohlenstoffatomen,
Z $C_{2-6}$-Alkylen,
Z' $C_{2-6}$-Alkylen,
Z" $C_{2-6}$-Alkylen oder -$CH_2$-CHOH-$CH_2$-,
p eine Zahl von 0 bis 2, vorzugsweise 0 bis 1,
q jeweils mindestens 1, wobei $\Sigma q \leq 70$,

und

$An^-$ ein Gegenion zum Ammoniumkation

bedeuten.

Wenn in der Formel (III) $R_6$ Wasserstoff bedeutet, können vorteilhaft die entsprechenden protonierbaren, freien Basen der Formel

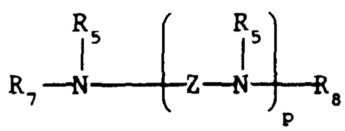

(IV)

eingesetzt werden, welche dann protoniert werden können.

Der Rest $R_9$ enthält vorteilhaft 11 bis 21 Kohlenstoffatome. Als Reste $R_9$-$CH_2$- kommen vornehmlich die folgenden in Betracht: Lauryl, Palmityl, Cetyl, Oleyl, Stearyl, Behenyl, Arachidyl, Talgalkyl und Kokosalkyl, worunter diejenigen mit 12 bis 18 Kohlenstoffatomen bevorzugt sind. Als Reste $R_9$-CO- kommen insbesondere die Acylreste der entsprechenden Fettsäuren in Betracht, z.B. Lauroyl, Palmitoyl, Myristoyl, Oleoyl, Stearoyl, Behenoyl und Arachidoyl, sowie die Reste von technischen Fettsäuren, z.B. der Talgfettsäure und der Kokosfettsäure, worunter diejenigen mit 12 bis 18 Kohlenstoffatomen bevorzugt sind.

Wenn mehr als ein Rest Z im Molekül vorhanden ist, können diese untereinander die gleiche bedeutung oder unterschiedliche Bedeutungen haben.

Z steht vorzugsweise für $Z_1$, d.h. für Äthylen oder Propylen, worunter Propylen-1,3 besonders bevorzugt ist.

Z' steht vorzugsweise für $Z_2$, d.h. für Äthylen oder Propylen, worunter Äthylen besonders bevorzugt ist.

Z" steht vorzugsweise für Äthylen, Propylen oder 2-Hydroxypropylen-1,3.

$R_5$ steht vorzugsweise für Methyl, Äthyl oder einen Rest der Formel -($CH_2$-$CH_2$-O)$_{q1}$-H.

$R_6$ steht vorzugsweise für Wasserstoff, $C_{1-4}$-Alkyl oder Benzyl, besonders bevorzugt für Wasserstoff.

p steht vorzugsweise für 0 oder 1.

$R_7$ steht vorzugsweise für $R_7$', d.h. für einen Rest der Formel $R_9$-$CH_2$-, $R_9$-CO-O-$Z_2$- oder $R_9$-CO-NH-$Z_1$-.

$R_8$ steht vorzugsweise für $C_{1-4}$-Alkyl oder einen Rest der Formel -($CH_2$-$CH_2$-O)$_{q1}$-H.

q1 bedeutet mindestens 1, wobei $\Sigma q1 \leq 40$, vorzugsweise ist $\Sigma q1$ = 1 bis 20.

In einer bevorzugten Untergruppe der kationischen Tenside ($D_K$) der Formel (III) bedeuten

$R_5$ $R_5$', d.h. Methyl, Äthyl oder einen Rest der Formel -($CH_2$-$CH_2$-O)$_{q1}$-H,
$R_6$ Wasserstoff,
$R_8$ $R_8$', d.h. einen Rest der Formel -($CH_2$-$CH_2$-O)$_{q1}$-H,
p p', d.h. 0 oder 1,
und q q1, d.h. mindestens 1, wobei $\Sigma q1$ = 1 bis 40, vorzugsweise 1 bis 20;
$An^-$ steht dabei für ein Gegenion, wie es durch Protonierung entsteht.

Bevorzugte Amine der Formel (IV) entsprechen der Formel

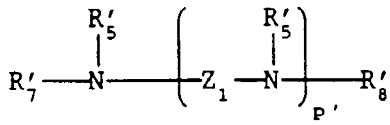 (IV').

Als amphotere Tenside ($D_X$) kommen im allgemeinen beliebige Amphotenside in Betracht, z.B. solche wie in B.R. BLUESTEIN and Clifford L. HILTON "Amphoteric Surfactants" (Band 12 von "Surfactant Science Series" Marcel DEKKER Inc., New York and Basel, 1982), besonders in den Kapiteln 1 bis 4 beschrieben. Im wesentlichen kommen solche Amphotenside in Betracht, die neben einem lipophilen Kohlenwasserstoffrest und einer anionischen Gruppe (bzw. Säuregruppe) im Molekül mindestens eine tertiäre, gegebenenfalls protonierte Aminogruppe oder quaternäre Ammoniumgruppe enthalten. Vorteilhaft werden als ($D_X$) solche Amphotenside eingesetzt, worin die anionische Gruppe (als freie Säuregruppe angegeben) eine Carbon- oder Sulfonsäuregruppe ist und der lipophile Kohlenwasserstoffrest ein aliphatischer Fettrest ist, der über eine Carbamoylgruppe an den übrigen Teil des Moleküls gebunden ist, oder der 2-ständige Substituent eines amphoteren Imidazolins oder des Imidazoliniumringes eines Betains der Imidazoliniumreihe ist. Vorzugsweise werden als amphotere Tenside ($D_X$) solche eingesetzt, die den Formeln (II), (III), (IV) oder/und (V) [bzw. (Vbis)] der EP 417 047 A2 entsprechen, auf welche hier ausdrücklich Bezug genommen wird. Unter den genannten amphoteren Tensiden sind insbesondere diejenigen der folgenden Formel

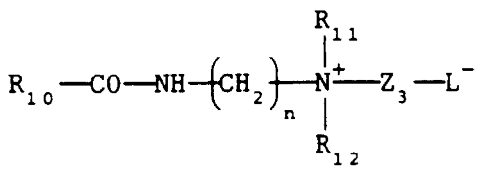 (V)

bevorzugt, worin

| | |
|---|---|
| $R_{10}$ -CO- | den Acylrest einer Fettsäure mit 8 bis 24 Kohlenstoffatomen, |
| $R_{11}$ | Wasserstoff, $C_{1-4}$-Alkyl, $C_{2-4}$-Hydroxyalkyl oder Benzyl, |
| $R_{12}$ | $C_{1-4}$-Alkyl oder $C_{2-4}$-Hydroxyalkyl, |
| $Z_3$ | $C_{1-3}$-Alkylen oder 2-Hydroxypropylen-1,3, |
| $L^-$ | $-COO^-$ oder $-SO_3^-$ |

und

n 2 bis 6

bedeuten.

$R_{10}$-CO- steht vorteilhaft für den Acylrest einer aliphatischen Fettsäure mit 12 bis 20, vorzugsweise 14 bis 18 Kohlenstoffatomen, insbesondere von solchen wie oben aufgezählt.

$R_{11}$ steht vorzugsweise für Wasserstoff, Methyl, Äthyl, β-Hydroxypropyl oder β-Hydroxäthyl, worunter Wasserstoff und Methyl besonders bevorzugt sind.

$R_{12}$ steht vorzugsweise für Methyl, Äthyl, β-Hydroxyäthyl oder β-Hydroxypropyl, worunter Methyl und insbesondere β-Hydroxyäthyl bevorzugt sind.

$-Z_3-L^-$ steht vorzugsweise für die Carboxymethylgruppe oder besonders bevorzugt für die 2-Hydroxy-3-sulfopropyl-1-Gruppe.

Wenn in der obigen Formel (V) $R_{11}$ Wasserstoff bedeutet, so stellt diese die Form des inneren Salzes dar; je nach pH, insbesondere bei alkalischen pH--Werten, liegt die jeweilige Verbindung auch in Form des entsprechenden externen Salzes vor.

Die Art und Menge der Tenside im Dispergiermittelsystem (D) wird zweckmäßig so gewählt, daß eine entsprechende wäßrige Dispersion (P) von Wachs und Polydiorganosiloxan entstehen kann.

Vorzugsweise enthält (D) mindestens 10 Gew.-% ($D_0$), insbesondere 30 bis 100 Gew.-% ($D_0$).

Die erfindungsgemäßen Dispersionen (P) können dadurch hergestellt werden, daß die jeweiligen Komponenten miteinander zur Bildung einer entsprechenden Dispersion gemischt werden. Vorteilhaft wird eine wäßrige Wachsdispersion (W), die die Wachse (A) und - soweit vorhanden - (B) enthält, mit einer wäßrigen Dispersion (S) der Polydiorganosiloxane (C) gemischt, wobei mindestens ein Teil der Dispergatoren (D) in diesen Dispersionen enthalten ist und allfälliger restlicher oder weiterer Dispergator (D) und/oder zusätzliches Wasser sowie allfällige weitere Zusätze [z.B. (E), (F) oder/und (G) wie unten definiert] gleichzeitig oder nachträglich beigemischt werden können.

Besonders bevorzugt wird eine wäßrige Dispersion (W') der Wachse (A) und (B) hergestellt, die als Dispergator

($D_1$) mindestens ein kationisches Tensid ($D_K$) und/oder mindestens ein amphoteres Tensid ($D_X$) und/oder mindestens ein nicht-ionogenes Tensid ($D_0$)

enthält,

und diese wird mit einer wäßrigen Dispersion (S') von (C), die als Dispergiermittel

($D_2$) mindestens ein nicht-ionogenes Tensid ($D_0$) und gegebenenfalls mindestens ein amphoteres Tensid ($D_X$) und/oder gegebenenfalls mindestens ein kationaktives Tensid ($D_K$)

enthält,

und gegebenenfalls mit weiterem Tensid (D) oder/und Wasser gemischt.

($D_1$) ist vorteilhaft ein Dispergiermittelsystem mit nicht-ionogenem Charakter, d.h. es besteht aus ($D_0$), oder mit kationischem Charakter, d.h. es besteht aus ($D_K$) gegebenenfalls im Gemisch mit ($D_0$), oder mit amphoterem Charakter, d.h. es besteht aus ($D_X$) gegebenenfalls im Gemisch mit ($D_0$) und/oder mit ($D_K$). Vorzugsweise ist ($D_1$) ein Dispergiermittelsystem mit nicht-ionogenem oder, besonders bevorzugt, mit kationaktivem Charakter.

Das Gewichtsverhältnis von ($D_1$) zum Wachs [(A) und, falls vorhanden, (B)] wird zweckmäßig so gewählt, daß eine wäßrige Dispersion entstehen kann, und liegt insbesondere im Bereich von 10 bis 60, vorteilhaft 20 bis 50, vorzugsweise 25 bis 40 Gewichtsteilen ($D_1$) pro 100 Gewichtsteile Gesamtwachs.

Vorteilhaft werden feinteilige, wäßrige, konzentrierte Wachsdispersionen (W) bzw. (W') hergestellt, die einen Trokkenstoffgehalt vorzugsweise im Bereich von 10 bis 50, insbesondere 15 bis 40 Gew.-% aufweisen.

Die Herstellung der Wachsdispersionen kann auf an sich bekannte Weise erfolgen, insbesondere durch Mischen der Wachse und Tenside in der Schmelze und dann Verdünnen mit Wasser. Die Herstellung von Wachsdispersionen (W), insbesondere (W'), die nur nicht-ionogene Dispergatoren ($D_0$) enthalten, erfolgt vorteilhaft wie in der DE 35 19 337 A1 beschrieben, und besonders so wie dort bevorzugt. Die Herstellung von Wachsdispersionen (W), insbesondere (W'), die kationische Dispergatoren ($D_K$), gegebenenfalls im Gemisch mit nicht-ionogenen Dispergatoren ($D_0$), enthalten, erfolgt vorteilhaft wie in der DE 30 03 851 A1 beschrieben, und besonders so wie dort bevorzugt, oder analog dazu.

Die Polydiorganosiloxane (C) können, zur Herstellung einer Dispersion (S), insbesondere (S'), vorteilhaft mit einem Dispergiermittelsystem ($D_2$) auf an sich bekannte Weise in Wasser dispergiert werden, vorzugsweise so, daß eine sehr feine Dispersion oder auch eine Mikrodispersion entsteht. Als feinteilige Dispersion wird insbesondere eine solche verstanden, deren dispergierte Teilchen vorwiegend eine Teilchengröße ≤ 5 µm aufweisen, insbesondere so, daß praktisch alle dispergierten Teilchen eine Teilchengröße ≤ 2 µm aufweisen; als Mikrodispersion wird hier eine solche verstanden, worin die dispergierten Teilchen vorwiegend eine Teilchengröße ≤ 0,2 µm aufweisen, insbesondere so, daß praktisch alle dispergierten Teilchen eine Teilchengröße ≤ 0,1 µm aufweisen. Gelegentlich kann auch die Lichtdurchlässigkeit des Präparates als Maßstab für die Feinteiligkeit der Dispersion verwendet werden. Die Teilchengrößebereiche können beispielsweise durch die Messung der Lichtstreuung (z.B. Laser-Licht-Streuung) ermittelt werden.

Die Silicondispersionen (S) bzw. (S') können auf an sich bekannte Weise hergestellt werden, zweckmäßig durch geeignetes Mischen der jeweiligen Tenside, insbesondere ($D_0$) und gegebenenfalls ($D_X$) oder/und ($D_K$), mit den jeweiligen Siliconen (C) und der erforderlichen Menge Wasser. Bei aminofunktionellen Siliconen (C) ist es besonders vorteilhaft, den pH der Dispersionen auf saure Werte einzustellen, d.h. < pH 7, vorzugsweise im pH--Bereich von 3 bis 6,5. Die nicht-ionogenen Tenside ($D_0$) sind vorteilhaft solche, deren HLB-Wert im Bereich von 7 bis 16 liegt, wobei es besonders bevorzugt ist, ein Gemisch von mindestens zwei nicht-ionogenen Tensiden ($D_0$) zu verwenden, u.zw. von solchen mit silicon-freundlicherem Charakter, d.h. insbesondere lipophileren Tensiden ($D_0$), vorzugsweise mit einem HLB im Bereich von 7 bis 12, und hydrophileren Tensiden ($D_0$), d.h. insbesondere solchen mit einem HLB der vorzugsweise im Bereich von 12 bis 16 liegt, wobei der HLB-Wert des hydrophileren Tensids vorteilhaft um mindestens 0,5 Einheiten, insbesondere um 1 bis 4 Einheiten höher ist als derjenige des lipophileren Tensids ($D_0$). Das Gewichtsverhältnis der hydrophileren zu den lipophileren nicht-ionogenen Tensiden ($D_0$) in ($D_2$) liegt vorteilhaft im Bereich von 0,5: 1 bis 8:1, vornehmlich 0,75:1 bis 5:1, vorzugsweise 1,3:1 bis 3:1. Bei Einsatz von ($D_X$) liegt das Gewichtsverhältnis ($D_X$)/(C) vorteilhaft im Bereich von 0,05:1 bis 0,7:1, vorzugsweise 0,1:1 bis 0,5:1. Das Gewichtsverhältnis ($D_0$)/(C) liegt vorteilhaft im Bereich von 0,05:1 bis 0,8:1, vorzugsweise 0,07:1 bis 0,6:1. Das Gewichtsverhältnis ($D_K$)/(C) in (S) liegt vorteilhaft im Bereich von 0 bis 0,6:1, vorzugsweise 0 bis 0,3:1. Vorzugsweise werden zur Dispergierung von (C) zur Herstellung von (S) ($D_0$) und gegebenenfalls ($D_X$), besonders bevorzugt nur ($D_0$) verwendet.

Die wäßrigen Silicondispersionen (S), insbesondere (S'), enthalten vorteilhaft pro Gewichtsteil (C) 0,05 bis 1,1, vorzugsweise 0,1 bis 0,9 Gewichtsteile ($D_2$). Der Trockenstoffgehalt dieser Dispersionen (S) bzw. (S') liegt vorteilhaft im Bereich von 15 bis 70 Gew.-%, vorzugsweise 20 bis 60 Gew.-%, insbesondere 25 bis 50 Gew.-%; der pH liegt vorteilhaft im Bereich von 3 bis 9, vorzugsweise 4 bis 8.

Durch geeignete Wahl der Silicone (C) und Tenside ($D_2$), Reihenfolge der Zugaben, Wahl der jeweiligen Temperaturen und pH-Werte sowie Art und Einstellung der Mischapparatur, können sehr feine Dispersionen, insbesondere

auch Mikrodispersionen hergestellt werden. Die Herstellung von Silicondispersionen ist im allgemeinen in der Technik bekannt und auch in der Fachliteratur beschrieben. Als Dispersionen (S) können beispielsweise auch solche eingesetzt werden, wie sie nach den Herstellungsmethoden, die in den publizierten Europäischen Patentanmeldungen EP 138 192 A1, 186 847 A1, 378 828 A2 und 417 047 A2, in den US-Patenten 4 380 503 und 4 816 506, in den publizierten Britischen Patentanmeldungen GB-A 1 191 289, 1 598 845 und 2 215 729, in der Französischen publizierten Patentanmeldung FR-A 2 333 562, im DDR-Patent 133 196 und in "TORAY Technical Information M-011 about TORAY Silicone SF 8417 Fluid" beschrieben sind, erhältlich sind. Auf all diese Dokumente wird hier ausdrücklich Bezug genommen.

Die Wachs/Tensid-Gemische werden vorteilhaft bei solchen Temperaturen in Wasser dispergiert, die mindestens teilweise dem Schmelzbereich der Wachse entsprechen, wonach sie abgekühlt werden können.

Die Polydiorganosiloxane (C) können nach verschiedenen Methoden dispergiert werden, z.B. wie in der obenangegebenen Referenzliteratur beschrieben.

Die beiden Dispersionen (W) und (S), besonders (W') und (S'), können unter einfachem Rühren miteinander und, erforderlichenfalls, mit Wasser vermischt werden, z.B. bei Temperaturen im Bereich von 10°C bis zu Temperaturen im Schmelzbereich der Wachse, oder es kann z.B. die noch heiße Wachsdispersion (W) (z.B. 80 bis 95°C), direkt oder nach Vorverdünnen mit Wasser, in die kalte (z.B. 10 bis 30°C) Silicondispersion (S) eingerührt werden, oder umgekehrt kann z.B. die kalte Silicondispersion (S) in die noch heiße Wachsdispersion (W) bei abgestellter Heizung eingerührt und anschließend, erforderlichenfalls, mit Wasser verdünnt werden. Gewünschtenfalls kann weiterer Dispergtor (D) zugegeben werden. Wenn weiterer Dispergator (D) separat zugegeben wird, ist dieser vorteilhaft

($D_3$) mindestens ein kationischer Dispergator ($D_K$) oder/und mindestens ein amphoterer Dispergator ($D_X$) oder/und mindestens ein nicht-ionogener Dispergator ($D_0$).

Vorzugsweise besteht ($D_3$) aus mindestens einem kationischen Dispergator ($D_K$) oder aus mindestens nicht-ionogenen Dispergator ($D_0$) oder aus einem Gemisch davon. Nach einer bevorzugten Variante wird eine Teilmenge an ($D_0$) separat beim Mischen von (W) mit (S) zugegeben.

Die gesamten Tenside (D) [vorzugsweise in Form von ($D_1$) und ($D_2$) und gegebenenfalls zusätzlichen Dispergator (D), z.B. ($D_3$)] werden vorteilhaft so gewählt, daß in der hergestellten Dispersion (P) das Gewichtsverhältnis der gesamten Tenside (D) zu [(A) + (B) + (C)] im Bereich von 0,05:1 bis 0,8:1, vorzugsweise 0,08:1 bis 0,6:1, insbesondere 0,1:1 bis 0,5:1 liegt.

Der Trockenstoffgehalt der erfindungsgemäßen wäßrigen Dispersionen (P) liegt vorteilhaft im Bereich von 5 bis 50, vorzugsweise 8 bis 40 Gew.-%, bezogen auf das Gesamtgewicht von (P).

Der pH der Dispersionen (P) ist vorteilhaft von deutlich sauer bis leicht basisch, vorteilhaft im Bereich von pH 3 bis 9; vorzugsweise liegt der pH im nahezu neutralen bis deutlich sauren Bereich, insbesondere im pH-Bereich von 3 bis 7, besonders bevorzugt im schwach-sauren Bereich, insbesondere im pH-Bereich von 3,5 bis 6.

Die erfindungsgemäßen wäßrigen Dispersionen (P) können, außer den angegebenen Komponenten (A), (C) und (D) und gegebenenfalls (B), gegebenenfalls kleinere Anteile an weiteren Zusätzen enthalten, insbesondere

(E) mindestens eine Säure und/oder mindestens eine Base zur pH-Einstellung,
(F) mindestens ein Lösungsmittel und/oder mindestens ein Hydrotropiermittel, z.B. aus der Polysiloxanherstellung bzw. aus der (C)-Dispersionsherstellung
und/oder (G) mindestens ein Konservierungsmittel oder/und mindestens einen Duftstoff.

Die Komponenten (E) sind im allgemeinen übliche Basen oder Säuren, insbesonders solche, wie sie in der EP 417 047 A2 beschrieben sind.

Die Komponenten (F) sind vornehmlich solche, wie in der EP 417 047 A2 beschrieben, und werden auch vorteilhaft in den dort angegebenen Mengenverhältnissen eingesetzt. Als (F) eignet sich aber auch z.B. Cumolsulfonat.

Als Konservierungsmittel (G) kommen vor allem Biozide (Fungizide oder Bakterizide) und/oder Frostschutzmittel [z.B. Mono- oder Di-($C_{2-4}$-alkylen)-glykole, Glycerin oder Butan-1,3-diol] in Betracht.

Bevorzugt enthalten die erfindungsgemäßen wäßrigen Dispersionen (P), außer den oben genannten Komponenten (A), (C), (D) und gegebenenfalls (B), (E), (F) oder/und (G) sowie Wasser, keine weiteren Zusätze. Besonders bevorzugt bestehen die erfindungsgemäßen Dispersionen (P) im wesentlichen aus (A), (C), (D), Wasser und gegebenenfalls eine oder mehrere der Komponenten (B), (E), (F) und/oder (G).

Die erfindungsgemäßen Dispersionen (P) sind sehr feinteilig und zeichnen sich durch ihre Lagerbeständigkeit aus.

Die erfindungsgemäßen Dispersionen (P) dienen als Ausrüstungsmittel für Fasermaterial und können, so wie sie formuliert sind, direkt zur Formulierung der Applikationsflotte eingesetzt werden oder können erforderlichenfalls, vor der Applikation aus wäßrigem Medium, mit Wasser zu verdünnteren Stammdispersionen - je nach Bedarf - verdünnt werden. Sie sind zur Ausrüstung von Fasermaterial, insbesondere Textilmaterial aus wäßrigem Medium, besonders zur Verbesserung von Griff- und Gleiteigenschaften geeignet.

Es eignet sich beliebiges Textilmaterial, wie es in der Textilindustrie vorkommt, u.zw. sowohl natürliche als auch

synthetische und halbsynthetische Materialien und deren Gemische, insbesondere natürliche oder regenerierte oder modifizierte Cellulose, natürliches oder synthetisches Polyamid, polyester-, polyurethan- oder polyacrylnitrilhaltiges Material, sowie Gemische daraus (z.B. PES/CO und PAN/CO). Das Material kann in einer beliebigen Bearbeitungsform vorliegen, z.B. als lose Fasern, Filamente, Fäden, Garnstränge, Gewebe, Gewirke, Vliese, Vliesstoffe, Filze, Teppiche, Samt, Tuftingware oder auch Halbfertig- oder Fertigware. Vorzugsweise werden Textilbahnen, Textilschlauchware (insbesondere Gewirkschlauchware) oder Stückware ausgerüstet.

Die Ausrüstung erfolgt zweckmäßig aus wäßrigem, deutlich saurem bis schwach basischem Medium, insbesondere im pH-Bereich von 3,0 bis 8,5. Die Konzentration der erfindungsgemäßen Präparate, bezogen auf das Substrat, kann je nach Art und Beschaffenheit des Substrates und gewünschtem Effekt in weiten Grenzen variieren und beträgt - berechnet als Summe der Komponenten [(A) + (B) + (C)] - vorteilhaft Werte im Bereich von 0,01 bis 2, vorzugsweise 0,1 bis 1,5 Gew.-% [(A) + (B) + (C)] bezogen auf das Trockengewicht des Substrates.

Das erfindungsgemäße Ausrüstungsverfahren wird vorteilhaft als letzte Ausrüstungsstufe des Materials durchgeführt, vorzugsweise im Anschluß an eine Bleiche, optische Aufhellung oder/und an ein Färbeverfahren, gegebenenfalls zusammen mit einer zusätzlichen Behandlung, z.B. einer optischen Aufhellung oder/und einer Kunstharzausrüstung des Fasermaterials. Die Ausrüstung kann nach beliebigen an sich üblichen Verfahren durchgeführt werden, z.B. nach Ausziehverfahren oder vorzugsweise nach Imprägnierverfahren. Bei Ausziehverfahren können sowohl Verfahren aus langer als auch aus kurzer Flotte in Frage kommen, z.B. bei Flottenverhältnissen im Bereich von 100:1 bis 4:1, insbesondere zwischen 60:1 und 5:1; die Applikationstemperatur kann auch bei üblichen Werten liegen, beispielsweise im Bereich zwischen Raumtemperatur und 60°C, vorzugsweise im Bereich von 25°C bis 40°C, der pH-Wert liegt vorzugsweise im Bereich von 4 bis 8. Das Imprägnieren kann ebenfalls nach an sich üblichen Verfahren durchgeführt werden, z.B. durch Tauchen, Foulardieren oder Schaumauftrag, vorzugsweise bei Temperaturen von 15 bis 40°C und bei pH-Werten im Bereich von 4 bis 8. Nach dem Imprägnierverfahren bzw. nach dem Ausziehverfahren kann die behandelte Ware auf übliche Weise getrocknet werden, insbesondere bei 30 bis 180°C, vorzugsweise 60 bis 140°C. Kunstharzappreturen können bei üblichen Temperaturen, insbesondere bei 130 bis 190, vorzugsweise 140 bis 180°C, fixiert werden.

Die Dispersionen (P) sind besonders für die Applikation nach Imprägnierverfahren wie oben genannt, vor allem für die Ausrüstung von Weißware, geeignet.

Durch die erfindungsgemäße Ausrüstung mit (P) können, neben einem sehr angenehmen und nicht in unerwünschter Weise "fließenden" Weichgriff hoher Permanenz des Textilmaterials, auch eine Verbesserung der maschinellen Verarbeitbarkeit, insbesondere der maschinellen Trockenverarbeitung, vor allem der Nähbarkeit erzielt werden, wobei die Saugfähigkeit des Substrates praktisch nicht beeinträchtigt wird. Die Dispersionen (P) worin das Gewichtsverhältnis (C)/(A) < 1 ist, z.B. oberhalb 0,05:1, vorzugsweise im Bereich von 0,1:1 bis 0,5:1, eignen sich besonders für eine hervorragende Verbesserung der maschinellen Trockenverarbeitbarkeit, vor allem der Nähbarkeit, während diejenigen worin das Gewichtsverhältnis (C)/(A) ≥ 1 ist, insbesondere > 1, z.B. im Bereich von 1:1 bis 10:1, vorzugsweise im Bereich von 1,2:1 bis 4:1, sich besonders zur Erzielung hervorragender Weichgriffausrüstungen eignen.

Insbesondere ist ausgerüstete Weißware von optimalem Weiß und mit gleichmäßigem, fleckenfreiem Warenbild erhältlich.

In den folgenden Beispielen bedeuten die Teile Gewichtsteile und die Prozente Gewichtsprozente; die Temperaturen sind in Celsiusgraden angegeben; Gewichtsteile stehen zu Volumenteilen wie g zu ml; C.I. steht für Colour Index.

Es werden die folgenden Wachse, Polydiorganosiloxane, Tenside und daraus hergestellten Wachsdispersionen und Polydiorganosiloxandispersionen eingesetzt:

<u>Oxydierte Wachse (A)</u>

($A_1$) Teilverseiftes Fischer Fischer-Tropsch-Wachs mit folgenden Spezifikationen:

| | |
|---|---|
| Erstarrungspunkt (DGF M-III-4a) | 90-93 °C |
| Tropfpunkt (DGF M-III-3) | 105-115 °C |
| Nadelpenetration (DGF M-III-9b) | 1-2 dmm |
| Säurezahl | 10-14 |
| Verseifungszahl | 20-30. |

($A_2$) Oxydiertes Mikrowachs mit folgenden Spezifikationen:

| | |
|---|---|
| Tropfpunkt | 98 °C |
| Nadelpenetration ASTM D-1321 | 2 dmm |

(fortgesetzt)

| | |
|---|---|
| Säurezahl | 13 |
| Verseifungszahl | 30. |

($A_3$) Oxydiertes Polyäthylenwachs mit folgenden Spezifikationen:

| | |
|---|---|
| Tropfpunkt | 137 °C |
| Nadelpenetration ASTM D-1321 | ≤ 0,5 dmm |
| Dichte | 0,99 g/cm$^3$ |
| Säurezahl | 30. |

($A_4$) Oxydiertes Polyäthylenwachs mit folgenden Spezifikationen:

| | |
|---|---|
| Schmelztemperatur | 126-137 °C |
| Erstarrungspunkt | 120-122 °C |
| Dichte | 0,99 g/cm$^3$ |
| Säurezahl | 20-24 |
| Verseifungszahl | 29-31 |
| Nadelpenetration (DGF M-III-9b) | 1 dmm. |

Nicht oxydierte Paraffinwachse (B)

Paraffin vollraffiniert mit folgenden Spezifikationen:

| | | |
|---|---|---|
| ($B_1$) | Erstarrungspunkt | 94-98 °C |
| | Tropfpunkt | 105-108 °C |
| | Nadelpenetration (ASTM D-1321) | 1-3 dmm |
| ($B_2$) | Schmelzpunkt | 56-58 °C |
| | Nadelpenetration (ASTM D-1321) | 20 dmm |
| ($B_3$) | Tropfpunkt | 88-93 °C |
| | Nadelpenetration (ASTM D-1321) | 10-15 dmm |
| | Dichte | 0,9 g/cm$^3$ |

Polydiorganosiloxane (C)

($C_1$) Einheitliches aminofunktionelles* Polydimethylsiloxan mit reaktiven Methoxyendgruppen; Aminzahl = 0,15; Viskosität = 5000 cP.
($C_2$) Aminofunktionelles* Polydimethylsiloxan mit reaktiven Hydroxyendgruppen; Aminzahl = 0,036.
($C_3$) Einheitliches aminofunktionelles* Polydimethylsiloxan mit reaktiven methoxyendgruppen, mit einer Aminzahl (vor der Acetylierung) = 0,3 und einer Viskosität (vor der Acetylierung) = 1000 cP, in welchem (75 ± 5) Mol% der Aminogruppen acetyliert sind.
($C_4$) Einheitliches aminofunktionelles** Polydimethylsiloxan mit Trimethylsilylendgruppen; Aminzahl = 0,3; Viskosität = 1000 cP.
($C_5$) Polydimethylsiloxandiol mit einer Viskosität von 3000 - 4000 cP.
($C_6$) Einheitliches, aminofunktionelles* Polydimethylsiloxan mit Trimethylsilyl-Endgruppen; Aminzahl = 0,33; Viskosität = 900 cP.

* mit Si-gebundener Gruppe

$$-(CH_2)_3-NH-(CH_2)_2-NH_2$$

** mit Si-gebundener Gruppe

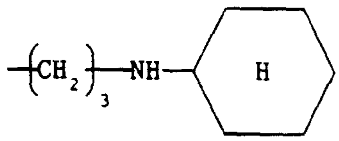

Tenside ($D_0$)

($D_{01}$) Anlagerungsprodukt von 10 Mol Äthylenoxyd an 1 Mol Stearylalkohol.
($D_{02}$) Anlagerungsprodukt von 60 Mol Äthylenoxyd an 1 Mol Stearylalkohol.
($D_{03}$) Anlagerungsprodukt von 5 Mol Äthylenoxyd an 1 Mol Laurylalkohol.
($D_{04}$) Anlagerungsprodukt von 9,5 Mol Äthylenoxyd an 1 Mol technischen Isotridecylalkohol.
($D_{05}$) Anlagerungsprodukt von 4 Mol Äthylenoxyd an 1 Mol technischen Isotridecylalkohol***.
($D_{06}$) Anlagerungsprodukt von 6 Mol Äthylenoxyd an 1 Mol 2,6,8-Trimethylnonanol-4 (Tergitol TMN-6, Union Carbide).
($D_{07}$) Stearinsäure-diäthanolamid.
($D_{08}$) Anlagerungsprodukt von 8 Mol Äthylenoxyd an 1 Mol technischen $C_{13-15}$-Oxoalkohol****.
($D_{09}$) Anlagerungsprodukt von 18 Mol Äthylenoxyd an 1 Mol technischen Isotridecylalkohol***.

Tenside ($D_K$)

($D_{K1}$)

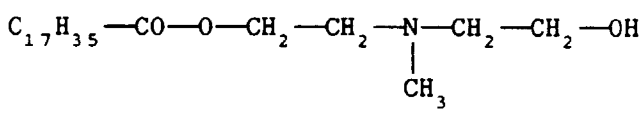

($D_{K2}$) Anlagerungsprodukt von 7 Mol Äthylenoxyd an 1 Mol Talgfettamin
($D_{K3}$) Anlagerungsprodukt von 15 Mol Äthylenoxyd an 1 Mol Fettamin, worin der Fettrest die folgende Zusammensetzung aufweist:
3 % $C_{12}H_{25}$-, 3 % $C_{14}H_{29}$ -, 6 % $C_{16}H_{33}$-, 4 % $C_{16}H_{31}$-, 9 % $C_{18}H_{37}$- und 75 % $C_{18}H_{35}$-.
($D_{K4}$) Anlagerungsprodukt von 2 Mol Äthylenoxyd an 1 Mol Talgfettamin
($D_{K5}$) Anlagerungsprodukt von 5 Mol Äthylenoxyd an 1 Mol Talgfettamin

Wachsdispersionen (W)

($W_1$) Wäßrige Wachsdispersion hergestellt wie folgt:

141,3 Teile Wachs ($A_1$), 64,4 Teile Hartparaffin ($B_1$) und 19,2 Teile Emulgator ($D_{01}$) werden zusammengeschmolzen. Anschließend werden bei 125 °C 5,4 Teile 30 %-ige Natriumhydroxydlösung zugegeben und es wird bis zur Erreichung einer Innentemperatur von 135 °C leicht evakuiert, wobei 3,8 Teile Wasser abdestilliert werden. Nun läßt man die klare Schmelze unter Rühren in 401,4 Teile kochendes Wasser einfließen, läßt einige Minuten nachrühren und gießt die erhaltene Dispersion auf 240,8 Teile Eis. Sobald eine rührbare Flüssigkeit entstanden ist wird der Rührer in Gang gesetzt und die erhaltene Emulsion wird noch mit 131,3 Teilen einer Lösung von 39,3

*** Technisches Isomerengemisch aus der Oxosynthese.
**** Technisches Isomerengemisch verzweigter, aliphatischer, gesättigter $C_{13-15}$-Alkohole aus der Oxosynthese.

Teilen Dipergator ($D_{02}$) in 92,0 Teilen Wasser versetzt und dann ausgeladen.

($W_2$) Wäßrige Wachsdispersion hergestellt wie folgt:

134,0 Teile Wachs ($A_2$) und 134,0 Teile Paraffin ($B_2$) werden bei 110-115 °C zusammengeschmolzen. Anschließend werden bei 115 °C 18,0 Teile Dispergator ($D_{K3}$) sowie 30,0 Teile Dispergator ($D_{07}$) und 30,0 Teile Dispergator ($D_{K1}$) zugegeben. Nun wird noch 1,0 Teil Eisessig zugegeben und man läßt die klare Schmelze unter Rühren in 452,0 Teile kochendes Wasser einfließen. Sodann läßt man einige Minuten nachrühren und gießt die erhaltene Dispersion von 90-95 °C auf 501,0 Teile Eis. Sobald eine rührbare Flüssigkeit entstanden ist wird der Rührer in Gang gesetzt. Die erhaltene Emulsion wird noch mit 8,0 Teilen Eisessig versetzt und dann ausgeladen.

($W_3$) Wäßrige Wachsdispersion hergestellt wie folgt:

140 Teile Wachs ($A_3$), 60 Teile Hartparaffin ($B_3$), 60 Teile Dispergator ($D_{K2}$), 600 Teile Wasser, 1,26 Teile Eisessig und 2 Teile Natriumpyrosulfit werden in einem Autoklaven (Überdruck = 4,4 bar), unter Rühren, auf 145 °C erhitzt und anschließend wird die entstandene feine Emulsion auf Raumtemperatur abgekühlt.

($W_4$) Wäßrige Wachsdispersion hergestellt wie folgt:

168,7 Teile Wachs ($A_3$), 45,4 Teile Wachs ($A_4$), 50,7 Teile Dispergator ($D_{K2}$), 6,9 Teile Dispergator ($D_{K4}$), 6,9 Teile Dispergator ($D_{K5}$), 4,3 Teile Eisessig, 2,1 Teile Natriumpyrosulfit und 715,0 Teile Wasser werden in einem Autoklaven (Überdruck = 4,4 bar), unter Rühren, auf 145 °C erhitzt und anschließend wird auf Raumtemperatur abgekühlt.

Silicondispersionen (S)

($S_1$) Wäßrige Dispersion aus

32,9 Teilen Silicon ($C_1$)
1,8 Teilen ($D_{03}$)
4,2 Teilen ($D_{04}$)
0,2 Teilen Eisessig
5,0 Teilen Glycerin
55,9 Teilen Wasser.

pH 5,5. Mittlere Teilchengröße unter 1 µm.

($S_2$) DOW CORNING Q2-7419 Emulsion, welche eine wäßrige Dispersion aus

34,5 Teilen Silicon ($C_2$)
3,5 Teilen Fettalkoholpolyglykoläther
62,0 Teilen Wasser

von pH 4,5 ist. Mittlere Teilchengröße unter 1 µm.

($S_3$) Wäßrige Mikrodispersion aus:

20,2 Teilen Silicon ($C_3$)
7,0 Teilen Tensid ($D_{05}$)
3,0 Teilen Tensid ($D_{04}$)
15,0 Teilen Dipropylenglykol
0,5 Teilen Eisessig
0,2 Teilen 36,5 %-iger Salzsäurelösung
54,1 Teilen Wasser

pH 4,0. Mittlere Teilchengröße < 0,1 µm.

($S_4$) WACKER FINISH CT 100 E, welches eine wäßrige Mikrodispersion aus:

17,0 Teilen Silicon ($C_4$)
8,0 Teilen Fettalkoholpolyglykoläther
76,0 Teilen Wasser

von pH 3,5 ist. Mittlere Teilchengröße < 0,1 µm.

($S_5$) Wäßrige Dispersion aus:

27,5 Teilen Silicon ($C_5$)
5,5 Teilen Silicon ($C_6$)
3,3 Teilen Tensid ($D_{06}$)
0,4 Teilen Eisessig
63,3 Teilen Wasser

pH 6. Mittlere Teilchengröße unter 1 µm.

Beispiel 1: Dispersion ($P_1$)

375 Teile Wasser werden vorgelegt, sodann werden 125 Teile Wachsdispersion ($W_3$) und 500 Teile Silikondispersion ($S_2$) bei Raumtemperatur zugegeben und verrührt.

Beispiel 2: Dispersion ($P_2$)

Man verfährt wie im Beispiel 1 beschrieben, mit dem Unterschied, daß anstelle von ($S_2$) die gleiche Menge ($S_1$) eingesetzt wird.

Beispiel 3: Dispersion ($P_3$)

674,5 Teile Wasser werden vorgelegt. Sodann werden bei Raumtemperatur in der angegebenen Reihenfolge vorerst 250,0 Teile Wachsdispersion ($W_3$), dann 25,0 Teile einer 40 %-igen wäßrigen Cumolsulfonat-Natriumsalz-lösung und dann 0,5 Teile Eisessig zugegeben, wobei sich der pH auf ca. 7,0 einstellt. Anschließend werden noch 50,0 Teile Silikondispersion ($S_4$) zugefügt und es wird nachgerührt und ausgeladen.

Beispiele 4 - 8: Dispersionen ($P_4$) bis ($P_8$)

Man verfährt wie im Beispiel 1 beschrieben, mit dem Unterschied, daß die folgenden Komponenten verrührt werden:

Dispersion ($P_4$): 700 Teile Wasser, 250 Teile Wachsdispersion ($W_3$) und 50 Teile Silikondispersion ($S_1$).

Dispersion ($P_5$): 375 Teile Wasser, 125 Teile Wachsdispersion ($W_4$) und 500 Teile Silikondispersion ($S_4$).

Dispersion ($P_6$): 250 Teile Wasser, 250 Teile Wachsdispersion ($W_1$) und 500 Teile Silikondispersion ($S_1$).

Dispersion ($P_7$): 550 Teile Wasser, 250 Teile Wachsdispersion ($W_2$) und 200 Teile Silikondispersion ($S_3$).

Dispersion ($P_8$): 700 Teile Wasser, 250 Teile Wachsdispersion ($W_2$) und 100 Teile Silikondispersion ($S_5$).

Beispiel 9: Dispersion ($P_9$)

Ein Gemisch aus 345 Teilen Wasser, 20 Teilen Tensid ($D_{08}$) und 10 Teilen Tensid ($D_{09}$) wird vorgelegt, sodann werden 125 Teile Wachsdispersion ($W_3$) und 500 Teile Silikondispersion ($S_2$) bei Raumtemperatur zugegeben und verrührt.

Applikationsbeispiele A bis J

Das Substrat wird bei Raumtemperatur (= 20 °C) bis zu einer 100 %-igen Trockengewichtzunahme mit einer wäßrigen Flotte foulardiert, die a g/l der Produkte ($P_1$) bis ($P_9$), b g/l optischen Aufheller C.I. Fluorescent Brightener 380, c g/l wäßrige 50 %-ige Dimethyloldihydroxyäthylenharnstofflösung und d g/l Magnesiumchlorid enthält, foulardiert. Anschließend wird das foulardierte Material einer thermischen Behandlung unterworfen. In der folgenden Tabelle sind die jeweiligen eingesetzten Produkte (P) und die verwendeten Parameter a, b, c und d sowie die Bedingungen der thermischen Behandlung enthalten.

| Applikationsbeispiel | Substrat | Zusammensetzung der Flotte | | | | | Thermische Behandlung | |
|---|---|---|---|---|---|---|---|---|
| | | (P) | a | b | c | d | Temperatur | Dauer |
| A | $T_1$ | ($P_1$) | 20 | 0 | 0 | 0 | 140 °C | 90 Sekunden |
| B | $T_3$ | ($P_2$) | 20 | 0 | 0 | 0 | 140 °C | 90 Sekunden |
| C | $T_2$ | ($P_3$) | 40 | 0,8 | 100 | 15 | 180 °C | 90 Sekunden |
| D | $T_2$ | ($P_4$) | 40 | 0,8 | 100 | 15 | 180 °C | 90 Sekunden |
| E | $T_1$ | ($P_5$) | 20 | 0 | 0 | 0 | 140 °C | 90 Sekunden |
| F | $T_3$ | ($P_6$) | 30 | 0 | 0 | 0 | 140 °C | 90 Sekunden |
| G | $T_4$ | ($P_7$) | 30 | 0 | 100 | 15 | 180 °C | 90 Sekunden |
| H | $T_2$ | ($P_8$) | 30 | 0,8 | 0 | 0 | 140 °C | 90 Sekunden |
| J | $T_1$ | ($P_9$) | 30 | 0 | 0 | 0 | 140 °C | 90 Sekunden |

Die eingesetzten Substrate $T_1$-$T_4$ sind die folgenden:

$T_1$ Baumwolltricot, Interlock, gebleicht, voraufgehellt;
$T_2$ Baumwolltricot, Interlock, gebleicht;
$T_3$ Polyester/Baumwolle (50/50) Intimmischung, Tricot, gefärbt mit Reaktiv- und Dispersionsfarbstoffen;
$T_4$ Baumwollgewebe gefärbt mit Reaktivfarbstoffen.

Die nach den obigen Applikationsbeispielen A bis J ausgerüstete Ware weist einen hervorragenden, angenehmen Weichgriff optimaler Fülle auf, der weder zu "fließend" ist noch den ausgesprochenen Charakter eines "Silikonweichgriffes" aufweist. Die gefärbten oder optisch aufgehellten Substrate sind in ihrer Farbe bzw. in ihrem Weiß nicht beeinträchtigt. Die Nähbarkeit ist sehr gut.

Der Weichgriff wird sowohl apparativ im "Handle-o-meter" (Typ 211-5 der Firma THÜRING Albert) als auch manuell mit je 10 verschiedenen Mustern einer selben Ausrüstung beurteilt. Die Nähbarkeit wird mit der in der DE 36 21 345 A1 für den "Nähtest" beschriebenen Apparatur, wie dort beschrieben ermittelt.

**Patentansprüche**

**1.** Wässrige dispergatorhaltige Wachs- und Polydiorganosiloxan-Dispersion (P) enthaltend als Wachs

(A) mindestens ein oxydiertes Kohlenwasserstoffwachs mit Nadelpenetration (nach ASTM D-1321) $\leq$ 4 dmm, und gegebenenfalls
(B) mindestens ein nicht-oxydiertes Kohlenwasserstoffwachs, und als Polysiloxan
(C) mindestens ein gegebenenfalls aminomodifiziertes oder/und nicht-ionogen modifiziertes Polydiorganosiloxan mit einem Stickstoffgehalt < 0,6 Gew.-%.

**2.** Wässrige Dispersion (P) gemäss Anspruch 1 enthaltend als Dispergator
(D) ein nicht-ionogenes, kationisches oder amphoteres Dispergiermittelsystem

**3.** Wässrige Dispersion (P) gemäss Anspruch 1 oder 2, zusätzlich enthaltend

(E) mindestens eine Säure und/oder mindestens eine Base zur pH-Einstellung,
(F) mindestens ein Lösungsmittel und/oder mindestens ein Hydrotropiermittel,
und/oder (G) mindestens ein Konservierungsmittel oder/und mindestens einen Duftstoff

in wässriger Dispersion.

**4.** Wässrige Dispersion (P) gemäss einem der Ansprüche 1 bis 3, dadurch gekennzeichnet, dass (C) eine Aminzahl im Bereich von 0,001 bis 0,4 aufweist.

**5.** Wässrige Dispersion (P) gemäss einem der Ansprüche 1 bis 4, mit einem pH im Bereich von 3,5 bis 6.

**6.** Verfahren zur Herstellung der wässrigen Dispersionen (P) gemäss einem der Ansprüche 1 bis 5, dadurch gekennzeichnet, dass man eine wässrige Wachsdispersion (W), die die Wachse (A) und gegebenenfalls (B) enthält, mit einer wässrigen Dispersion (S) der Polydiorganosiloxane (C) mischt, und gegebenenfalls (D), Wasser, (E), (F) oder/und (G) gleichzeitig oder nachträglich beimischt.

**7.** Verfahren nach Anspruch 6, dadurch gekennzeichnet, dass man eine wässrige Dispersion (W') von (A) und gegebenenfalls (B), welche als Dispergiermittelsystem
($D_1$) mindestens ein kationisches Tensid ($D_K$), mindestens ein amphoteres Tensid ($D_X$) und/oder mindestens ein nicht-ionogenes Tensid ($D_0$)
enthält,
und eine wässrige Dispersion (S') von (C), die als Dispergiermittelsystem
($D_2$) mindestens ein nicht-ionogenes Tensid ($D_0$) und gegebenenfalls mindestens ein amphoteres Tensid ($D_X$) und/oder mindestens ein kationisches Tensid ($D_K$)
enthält,
und gegebenenfalls weiteres Tensid (D) und/oder Wasser miteinander vermischt.

**8.** Verwendung der Disperionen (P) gemäss einem der Ansprüche 1 bis 5 zur Ausrüstung von Fasermaterial.

**9.** Verwendung gemäss Anspruch 8 zur Endausrüstung von Textilmaterial aus natürlicher oder regenerierter Zellulose, natürlichem oder synthetischen Polyamid, Polyester, Polyacrylnitril, Polyurethan oder Polyolefin.

**10.** Verwendung gemäss Anspruch 8 oder 9 zur Herstellung von optisch aufgehellter, ausgerüsteter Ware.

**Claims**

**1.** Aqueous, dispersant-containing wax- and polydiorganosiloxane-dispersion (P) containing as wax

(A) at least one oxidized hydrocarbon wax of needle-penetration (according to ASTM D-1321) ≤ 4 dmm and optionally
(B) at least one non-oxidized hydrocarbon wax and as polysiloxane
(C) at least one optionally amino-modified or/and non-ionogenically modified polydiorganosiloxane with a nitrogen-content < 0.6 % by weight.

**2.** Aqueous dispersion (P) according to Claim 1 containing as dispersant
(D) a non-ionogenic, cationic or amphoteric dispersant system.

**3.** Aqueous dispersion (P) according to Claim 1 or 2, further containing

(E) at least one acid and/or at least one base for pH-adjustment,
(F) at least one organic solvent and/or at least one hydrotrope
and/or (G) at least one preserving agent and/or at least one perfume.

in aqueous dispersion.

**4.** Aqueous dispersion (P) according to any one of Claims 1 to 3, characterised in that (C) has an amine number in the range of 0.001 to 0.4.

**5.** Aqueous dispersion (P) according to any one of Claims 1 to 4, with a pH in the range of 3.5 to 6.

**6.** Process for the production of aqueous dispersions (P) according to any one of Claim 1 to 5, characterised in that an aqueous wax-dispersion (W), containing the waxes (A) and optionally (B), is mixed with an aqueous dispersion (S) of the polydiorganosiloxanes (C) and simultaneously or subsequently (D), water, (E), (F) and/or (G) is optionally admixed.

**7.** Process according to Claim 6, characterised in that an aqueous dispersion (W') of (A) and optionally (B), which contains as dispersant system
($D_1$) at least one cationic surfactant ($D_K$), at least one amphoteric surfactant ($D_X$) and/or at least one non-ionogenic surfactant ($D_0$),

and an aqueous dispersion (S') of (C), which contains as dispersant system

($D_2$) at least one non-ionogenic surfactant ($D_0$) and optionally at least one amphoteric surfactant ($D_X$) and/or at least one cationic surfactant ($D_K$),

and optionally further surfactant (D) and/or water are admixed with each other.

**8.** Use of dispersions (P) according to any one of Claims 1 to 5 for the finishing of fibrous material.

**9.** Use according to Claim 8 for the conclusive finishing of textile material of natural or regenerated cellulose, natural or synthetic polyamide, polyester, polyacrylonitril, polyurethane or polyolefin.

**10.** Use according to Claim 8 or 9 for the production of optically brightened, finished goods.

## Revendications

**1.** Dispersion aqueuse (P) de cire et de polydiorganosiloxane contenant un dispersant et comprenant à titre de cire

(A) au moins une cire hydrocarbonée oxydée ayant un indice de pénétration à l'aiguille (selon la norme ASTM D-1321) $\leq$ 4 dmm,
et éventuellement
(B) au moins une cire hydrocarbonée non oxydée,
et à titre de polysiloxane
(C) au moins un polydiorganosiloxane éventuellement modifié par des groupes amino ou/et par des groupes non ionogènes et ayant une teneur en azote < 0,6% en poids.

**2.** Dispersion aqueuse (P) selon la revendication 1 contenant à titre de dispersant

(D) un système d'agents de dispersion non ioniques, cationiques ou amphotères.

**3.** Dispersion aqueuse (P) selon la revendication 1 ou 2, contenant en outre

(E) au moins un acide et/ou au moins une base pour régler le pH,
(F) au moins un solvant et/ou au moins un agent d'imprégnation,
et/ou (G) au moins un agent de conservation ou/et au moins un parfum

en dispersion aqueuse.

**4.** Dispersion aqueuse (P) selon l'une des revendications 1 à 3, caractérisé en ce que (C) présente un indice d'amine compris entre 0,001 et 0,4.

**5.** Dispersion aqueuse (P) selon l'une des revendications 1 à 4, ayant un pH compris entre 3,5 et 6.

**6.** Procédé de préparation des dispersions aqueuses (P) selon l'une des revendications 1 à 5, caractérisé en ce qu'on mélange une dispersion aqueuse (W) de cire, qui contient la cire (A) et éventuellement la cire (B), avec une dispersion aqueuse (S) des polydiorganosiloxanes (C), et on ajoute éventuellement (D), de l'eau, (E), (F) ou/et (G) simultanément ou ultérieurement.

**7.** Procédé selon la revendication 6, caractérisé en ce qu'on mélange une dispersion aqueuse (W') de (A) et éventuellement de (B), qui contient à titre de système d'agents de dispersion

($D_1$) au moins un agent tensio-actif cationique ($D_k$), au moins un agent tensio-actif amphotère ($D_x$) et/ou au moins un agent tensio-actif non ionique ($D_o$),

avec une dispersion aqueuse (S') de (C) qui contient à titre de système d'agents de dispersion

($D_2$) au moins un agent tensio-actif non ionique ($D_o$) et éventuellement au moins un agent tensio-actif amphotère ($D_x$) et/ou au moins un agent tensio-actif cationique ($D_k$),

et éventuellement avec un autre agent tensio-actif (D) et/ou de l'eau.

**8.** Utilisation des dispersions (P) selon l'une des revendications 1 à 5 pour l'apprêtage des matières fibreuses.

**9.** Utilisation selon la revendication 8 pour l'apprêtage final des matières textiles constituées de cellulose naturelle ou régénérée, de polyamide naturel ou synthétique, de polyester, de polyacrylonitrile, de polyuréthane ou de polyoléfine.

**10.** Utilisation selon la revendication 8 ou 9 pour la fabrication d'articles apprêtés, traités par des azurants optiques.